# EUROPÄISCHE PATENTSCHRIFT

(11) **EP 0 658 141 B1**
(45) Veröffentlichungstag und Bekanntmachung des Hinweises auf die Patenterteilung: **12.03.1997**
(21) Anmeldenummer: 93919085.6
(22) Anmeldetag: 18.08.1993
(51) Int. Cl.: B32B 31/00

(54) **VERFAHREN ZUR HERSTELLUNG VON DEKORFÄHIGEN FORMTEILEN**
PROCESS FOR MANUFACTURING DECORABLE MOULDED PARTS
PROCEDE DE FABRICATION DE PIECES MOULEES DECORABLES

(30) Priorität: 25.08.1992 DE 4228194
(43) Veröffentlichungstag der Anmeldung: 21.06.1995
(73) Patentinhaber: HP-CHEMIE PELZER RESEARCH & DEVELOPMENT Ltd., Waterford, County Waterford (IE)
(72) Erfinder: PELZER, Helmut, D-58454 Witten (DE)
(74) Vertreter: Jönsson, Hans-Peter, Dr.Dipl.-Chem.
(86) Internationale Anmeldenummer: EP9302201
(87) Internationale Veröffentlichungsnummer: WO9404358

(56) Entgegenhaltungen:
- EP-A- 0 266 109
- EP-A- 0 412 346
- WO-A-90/14226
- WO-A-92/05030
- DATABASE WPI Week 9310, 28. Oktober 1992 Derwent Publications Ltd., London, GB; AN 93-085928 & ZA,A,9 200 471 (PLAIL)
- PATENT ABSTRACTS OF JAPAN vol. 10, no. 218 (M-503)30. Juli 1986 & JP,A,61 057 322 (SUMITOMO BAKELITE CO. LTD.)

## Beschreibung

Gegenstand der Erfindung ist ein Verfahren zur Herstellung von dekorfähigen Formteilen aus extrusionsfähigem Kunststoffmaterial, insbesondere für den Innen- und Außenbereich von Automobilen, für den Laden- und/oder Messebau.

Formteile, beispielsweise Kotflügel oder Abdeckungen verschiedenster Art von Kraftfahrzeugen, bei denen die optische Oberflächengestaltung von großer Bedeutung ist, werden üblicherweise durch Spritzgußverfahren hergestellt. Die so erhaltenen Formteile werden anschließend mit Textilien, Dekorbeschichtungen oder Farbschichten versehen. Da die farbliche Oberflächengestaltung von Kunststoffmaterialien im Automobilbereich eine gewisse Schwierigkeit darstellt, werden auch bis in jüngste Zeit häufig Formteile, beispielsweise Abdeckungen für bewegliche Autodächer, Seitenteile, Türen oder Kotflügel, aus Metall hergestellt, die anschließend lackiert werden. Ursache hierfür ist, daß übliche Spritzgußverfahren zur Herstellung von Kunststoffformteilen, die anschließend einer problematischen Lackierung unterworfen werden, relativ aufwendig und teuer sind. Hier ist es erforderlich, daß der Lack besonders gut aushärtet und jede Verformung des Kunststoffes mitmacht und dementsprechend auch eine gewisse Flexibilität aufweist, die auch bei Verwindung oder Verbiegung des Kunststofformteils nicht zu Ablösungen von der Oberfläche führt. Bei den üblichen Lackierverfahren fällt darüber hinaus das sogenannte "Overspray" an, das nur mit aufwendigen Verfahren beseitigt werden kann.

Aus Römpp Chemie Lexikon, 9. Auflage, Seite 3681, 1982 sind beispielsweise Pulverlacke und insbesondere Pulverbeschichtungen bekannt, wobei man die Beschichtung von Metall- und Kunststoffoberflächen durch Auftragen und anschließendem Sintern von wärmehärtbaren Pulvern vornimmt. Diese können im Rotations- oder Flockverfahren durch Pulverspritzverfahren wie Flammspritzen, Kunststoff-Flammspritzen oder Metallspritzverfahren, im Wirbelsinterbad sowie durch elektrostatische Beschichtung (Pulverelektrostatik) aufgebracht werden. Zum Wirbelsintern sind insbesondere Thermoplaste bevorzugt.

Aus Ullmann's Encyclopedia of Industrial Chemistry, 5. Auflage, Band B1, Kapitel 8 - 66 und Band A9, Seite 558 und 559 sind Pulverbeschichtungen von Gegenständen bekannt.

Pulverbeschichtungen haben sich im Stand der Technik durchgesetzt, da hier zum Teil kein Overspray anfällt und auch keine Emissionen von Lösungsmitteln zu befürchten sind.

Im Automobilbereich treten jedoch häufig Probleme auf, den Lack gleichmäßig zu verteilen. Da insbesondere im Automobilbereich außerordentlich hohe Anforderungen an die optische Qualität von Oberflächenbeschichtungen gestellt werden, stellt die Lackierung von Formteilen aus Kunststoffmaterialien, insbesondere Spritzgußformteilen ein besonderes Problem dar.

Ein weiteres Problem bei der Lackierung von Spritzgußformteilen ist die üblicherweise schlechte Haftung zwischen der Lackbeschichtung und dem Substrat.

In der WO 92/05030 werden Oberflächenfilme zur Herstellung von Formteilen beschrieben, die ausgeprägte dekorative Eigenschaften aufweisen. Die Oberflächenfilme weisen eine wärmeformbare Trägerschicht auf, die einen verbesserten Schutz der dekorativen Eigenschaften des Films während der Herstellung des Artikels gewährleisten. Die Trägerschicht kann weiterhin zu dem gewünschten Finish während der Nachformung des Artikels beitragen.

Aus EP-0 266 109 A2 ist ein flexibles dekoratives Abdeckungsmaterial zur Verwendung in Automobiloberflächen und dergleichen offenbart. Das Material besteht aus einer im wesentlichen transparenten Außenschicht, einer pigmentierten Beschichtung auf der Unterseite der transparenten Schicht, die somit von außen sichtbar ist. Die pigmentierte Beschichtung weist reflektierende Teilchen auf, die gleichförmig in dem Material verteilt sind.

Aus EP-0 412 346 A2 ist ein Verfahren zur Herstellung einer harzreichen Oberflächenschicht auf einem thermoplastischen Verbundmaterial bekannt. Eine Schicht aus einem Rohharz in Pulverform wird entweder auf einer Formenoberfläche oder einem thermoplastischen Verbundfasermaterial abgeschieden. Die Harzschicht befindet sich gegenüber der isolierten Wand einer Druckform. Das Verbundmaterial wird vorgeheizt und mittels Druck zusammen mit dem gepulverten Harz umgeformt. Die Wärme fließt von dem Verbundmaterial und schmilzt die Pulverschicht unter Bildung einer harzreichen Schicht. Die isolierte Wand erlaubt das Rückhalten der Wärme, um das gepulverte Harz ausreichend zu schmelzen. In einer alternativen Ausführungsform wird das rohe Harzpulver ersetzt durch einen vorgeformten Film eines thermoplastischen Harzes, der mit dem Basismaterial des Formteils kompatibel ist. Es wird beschrieben, daß eine strukturelle homogene integrale molekulare Bindung zwischen dem Rohharz und dem dahinter befindlichen Substrat entstehen soll.

Im Stand der Technik, insbesondere bei der Herstellung von Konsumgütern wurden sogenannte "inmould"- oder auch "insert"-Verfahren vorgeschlagen, bei denen ein ausgehärteter und getrockneter Lack (Muster, Motiv) von einer Folie auf einen ABS-Film übertragen wird. Dieser Verbund wird tiefgezogen und gestanzt. Bedingt durch die Aushärtung des Lackes, der lediglich durch Oberflächenadhäsion mit dem ABS-Film verbunden ist, sind nur geringe Verformungen der Bauteile möglich. Der so hergestellte Vorformling wird in einem Hinterspritzwerkzeug positioniert und mit einem thermoplastischen Kunststoff hinterspritzt. Die Folie bleibt Bestandteil des Formteils. Bei dem "inmould"-Verfahren werden speziell modifizierte Heißprägefolien von der Rolle durch das Spritzwerkzeug geführt. Beim Spritzgießen lösen sich die Lackschichten unter dem Einfluß von Druck und Temperatur von der Trägerfolie und verbinden sich durch Adhäsion fest mit dem verspritzten Substrat.

Die Aufgabe der vorliegenden Erfindung besteht daher in der Bereitstellung eines vereinfachten Verfahrens zur Herstellung von dekorfähigen Formteilen aus extrusionsfähigen Kunststoffmaterialien, insbesondere für den Kraffahrzeugbau.

Eine weitere Aufgabe der vorliegenden Erfindung besteht darin, ein Verfahren zur Herstellung von Formteilen, insbesondere für den Kraftfahrzeugbau, zur Verfügung zu stellen, mit dem die Haftung zwischen der Farbbeschichtung und dem extrusionsfähigen Trägermaterial aus Kunststoff gegenüber dem Stand der Technik verbessert ist. Darüber hinaus ist erforderlich, daß das Verfahren auch den heutigen Umweltgesichtspunkten gerecht wird, wonach der Vermeidung von sogenanntem Overspray eine außerordentlich große Bedeutung zukommt. Ebenso ist von ebenso großer Bedeutung die optische Güte der Oberflächenbeschichtung.

Weitere Anforderungen an die dekorfähigen Formteile, insbesondere für den Kraftfahrzeugbau, sind beispielsweise die Möglichkeit einer ganzflächigen, einheitlichen Lackierung, ebenso wie die Möglichkeit, Dekore, beispielsweise Holzmaserungen, Bild- oder Schriftzüge, dauerhaft auf ein Kunststofformteil aufzubringen. Darüber hinaus sollten die erhaltenen Formteile möglichst auch der Wiederverwertung zugeführt werden können.

Die vorgenannten Aufgaben werden erfindungsgemäß gelöst durch ein Verfahren zur Herstellung eines mit einer getrockneten oder ausgehärteten Dekor- oder Lackschicht versehenen Formteils aus Kunststoffmaterialien, dadurch gekennzeichnet, daß die Dekor- oder Lackschicht im nicht getrockneten bzw. nicht ausgehärteten Zustand mit einem extrusionsfähigen thermoplastischen Kunststoff hinterspritzt oder hinterpreßt wird.

Mit Hilfe der vorliegenden Erfindung wird somit ein Kunststoffformteil von der äußeren Lackbeschichtung her zum Formteil hin aufgebaut.

Handelsübliche Pulverlacke sind in einem weiteren Temperaturbereich thermoplastisch und härten bei Erwärmung über diesen Temperaturbereich hinaus. Unterhalb der Vernetzungstemperatur sind diese Lacke in hohem Maß verformbar. Vorzugsweise wird das Laminat aus Dekorschicht oder Lackschicht und thermoplastischem Kunststoff vor oder während des Hinterspritzens oder Hinterpressens auf eine Temperatur oberhalb des Schmelzbereiches des höher schmelzenden Systems erwärmt, einer Temperatur, bei der sehr hohe Umformungsgrade erzielbar sind und nach Schaffung einer innigen Verbindung abgekühlt. Wenigstens an der Grenzfläche tritt dabei eine Schmelze beider Bestandteile auf, so daß durch Ineinanderlaufen eine partielle Mischung der Dekorschicht oder Lackschicht mit dem extrudierten Kunststoffmaterial in Form eines Blends auftritt. Gleichzeitig erhöht sich der Schmelzbereich der Dekorschicht oder Lackschicht durch Vernetzung und Übergang in den duroplastischen Bereich.

Eine darüber hinaus bevorzugte Ausführungsform der vorliegenden Erfindung besteht darin, daß man
(a) einen Trägerfilm mit einer trennbaren ganzflächigen Dekorschicht oder einheitlichen Lackschicht versieht,
(b) das so erhaltene Laminat ohne vorherige Trocknung oder Aushärtung der Dekorschicht oder Lackschicht mit einem extrusionsfähigen thermoplastischen Kunststoff hinterspritzt oder hinterpreßt,
(c) das erhaltene Formteil aus dem Werkzeug löst und anschließend
(d) den Trägerfilm und die ganzflächige Dekorschicht oder einheitliche Lackschicht durch Abziehen voneinander trennt.

Ein weiterer Vorteil des erfindungsgemäßen Verfahrens gegenüber den "inmould"- und "insert"-Verfahren besteht darin, daß die Verbindung zwischen Lackschicht und dem Kunststoffmaterial auf chemischem Weg und nicht ausschließlich durch Oberflächenadhäsion erfolgt. Obwohl eine zusätzliche Verwendung von Haftvermittlern in der Nähe der Grenzschicht möglich ist, ist diese jedoch in der Regel nicht erforderlich, da mit Hilfe der vorliegenden Erfindung die nicht ausgehärtete Dekorschicht oder Lackschicht nicht nur physikalisch mit dem Kunststoffmaterial verbunden wird. Vielmehr wird eine chemische Verbindung/Blend zwischen der Dekorschicht oder Lackschicht und dem Kunststoffmaterial erhalten.

Durch die abziehbare Gestaltung der Verbindung zwischen Trägerfilm und Dekorschicht oder Lackschicht ist es möglich, dekorative Oberflächenbeschichtungen unmittelbar auf Kunststoffmaterialien zur Verfügung zu stellen, die in ihrem Aussehen den üblicherweise durch Spritztechnik auf das vorgefertigte Formteil aufgebrachten Beschichtungen wenigstens gleichwertig sind.

Beispielsweise ist es möglich, durch Beschichtung einer handelsüblichen Polyesterfolie mit einem handelsüblichen Automobildecklack (Acrylatlack) oder einem Pulverlack eine lösbare Verbindung zwischen dem Trägerfilm und der Dekorschicht oder Lackschicht zu erzielen. Zur Verbesserung der Trennung von dem Trägerfilm und Dekorschicht oder Lackschicht können gegebenenfalls dem Trägerfilm Verbindungen beigemischt werden, die die Haftfähigkeit des aufzubringenden Lacks verringern. Beispielsweise können hier dem Trägerfilm wachsartige Materialien, Silikone oder ähnliches, beigefügt werden. Die Beschichtung des abziehbaren Trägerfilms mit der Dekorschicht oder Lackschicht kann beispielsweise durch Coextrusion des Films und eines Pulverlacks erfolgen. In gleicher Weise ist es im Sinne der vorliegenden Erfindung möglich, gleichzeitig auch den thermoplastischen Kunststoff ebenfalls zu extrudieren, so daß unmittelbar ein dreischichtiger Aufbau erhalten wird.

Die Dicke des Trägerfilms ist weniger kritisch, jedoch sollte dieser Trägerfilm vorzugsweise eine Dicke von 30 bis 200 µm, insbesondere 30 bis 100 µm aufweisen, damit eine ausreichende Stabilität im Preßwerkzeug gewährleistet ist. Besonders bevorzugt im Sinne der vorliegenden Erfindung ist ein Trägerfilm aus Polyester, da sich dieses Material besonders gut extrudieren läßt und keine Neigung zum Verkleben mit der Dekorschicht oder Lackschicht zeigt.

In gleicher Weise wie beim Trägerfilm ist die Schichtdicke der Dekorschicht oder der Lackschicht von geringerer Bedeutung. Diese sollte sich im üblichen Rahmen einer Automobil-Decklackschicht bewegen.

In einer bevorzugten Variante der vorliegenden Erfindung ist es daher möglich, den Trägerfilm durch Aufsprühen oder Tauchen mit der Dekorschicht oder Lackschicht zu überziehen. In gleicher Weise ist es möglich, die Dekorschicht oder Lackschicht durch Aufrakeln oder Aufwalzen auf den Trägerfilm aufzubringen.

In einer anderen bevorzugten Arbeitsweise wird beispielsweise mittels Walzendruckverfahren das gewünschte Dekor auf den Trägerfilm aufgebracht. Hierbei kann es sich beispielsweise um eine ganzflächige, einheitliche Lackierung des späteren Formteils handeln. In gleicher Weise ist es möglich, auf den Trägerfilm Dekore, beispielsweise Bilder, Schriftzüge oder auch Holzmaserungen, durch an sich bekannte Walzendruckverfahren aufzutragen. Bei diesen Verfahren tritt insbesondere bei der Verwendung von Pulverlacken kein Overspray auf, so daß das Verfahren in besonderer Weise heutigen umwelttechnischen Anforderungen genügt. In einem alternativen Auftragungsverfahren zur drucktechnischen Aufbringung des Dekors oder auch einer ganzflächigen einheitlichen Schicht ist es möglich, dieses durch an sich bekannte Pulverbeschichtungsverfahren aufzubringen, beispielsweise durch elektrostatische Abscheidung des Pulvers. Vorteilhafterweise wird dabei der Trägerfilm auf eine Temperatur gebracht, die ausreicht, die aufgebrachte Dekorschicht oder Lackschicht zu schmelzen, jedoch nicht auszuhärten oder zu trocknen und so den Wärmeinhalt des Films zu nutzen. Alternativ dazu ist es aber auch möglich, durch externe Wärmeeinwirkung eine ebene Oberfläche hoher Güte herzustellen. Hierbei ist jedoch zu beachten, daß keine Aushärtung oder Durchtrocknung der Dekorschicht oder Lackschicht erfolgt.

Obwohl im Stand der Technik eine Reihe von Verfahren zur Aufbringung von Pulverlacken auf jedwede Substrate bekannt sind, so unterscheidet sich diese weitere Variante des erfindungsgemäßen Verfahrens zur Herstellung von Formteilen von üblichen Lackierverfahren dadurch, daß der Pulverlack bei der Extrusion einer thermischen Vorbehandlung unterworfen wird, jedoch während der Extrusion noch nicht aushärtet oder durchtrocknet. Bei der Extrusion sollte die Temperatur beispielsweise im Bereich von 100 bis 130° C liegen, damit der Pulverlack beim Hinterspritzen, Hinterpressen oder in einem gesonderten Arbeitsgang bei Temperaturen im Bereich von beispielsweise 160 bis 210° C aushärten kann. Hierbei wird eine besonders gute chemische Verbindung zu dem extrusionsfähigen Kunststoffmaterial erzielt.

Erfindungsgemäß wird die Pulverbeschichtung aus Materialien ausgewählt, die vor der Laminierung mit dem extrusionsfähigen Kunststoff nicht ausgehärtet oder durchgetrocknet sein sollen. Vielmehr soll die Härtung erst in einem späteren Verfahrensstadium erfolgen, beispielsweise nachdem das Laminat einer gewünschten Verformung unterzogen wurde. Idealerweise reicht die Wärmekapazität des heißen extrusionsfähigen Kunststoffmaterials zur Härtung oder Vernetzung des Pulverlackes aus.

Wie oben ausgeführt, sind die gemäß der Erfindung einzusetzenden Pulverlacke im Stand der Technik bekannt. So werden gemäß der vorliegenden Erfindung die Pulverlacke insbesondere ausgewählt aus Polyimiden, Ethylen/Vinylacetat-Copolymeren, Polyestern, Polyepoxiden und deren Gemische.

Besonders bevorzugte thermoplastisch-duroplastische Pulverlacke im Sinne der vorliegenden Erfindung enthalten Epoxidharze, die üblicherweise durch elektrostatischen Sprayen oder durch andere Verfahren auf Oberflächen aufgebracht werden. Besonders bevorzugt im Sinne der vorliegenden Erfindung sind feste Epoxidharze auf der Basis von Bisphenol A (800 bis 2000 EEM), die mit festen Vernetzungsmitteln, beispielsweise Dicyandiamid, phenolischen Härtern, oder Dicarbonsäureanhydriden bei hohen Temperaturen ausgehärtet werden. Diese Duroplaste sind jedoch in dem oben angegebenen unteren Temperaturbereich der Coextrusion noch thermoplastisch und härten erst in nachfolgenden Verfahrensschritten bei hohen Temperaturen aus. Diese Bestandteile sind aus chemischer Sicht an sich zur Herstellung von funktionellen oder dekorfähigen Pulverbeschichtungen bekannt. Im Sinne der vorliegenden Erfindung ist weiterhin bevorzugt, anstelle von Dicyandiamiden Imidazole und insbesondere Maleinsäureanhydride als bei Raumtemperatur feste Vernetzungsmittel einzusetzen.

Besonders bevorzugt im Sinne der vorliegenden Erfindung werden über den gesamten Temperaturbereich thermoplastische Epoxy-Polyesterhybride oder die sogenannten Polyester-TGIC-Harze eingesetzt, die aus Ullmann's Encyclopedia bekannt sind. Zur Aushärtung oder Vernetzung der Dekorschicht oder Lackschicht des Formteils ist es erforderlich, diese nach dem Hinterspritzen auf hohe Temperaturen, beispielsweise im Bereich von 160 bis 240 °C, insbesondere 160 bis 210 °C im Verlauf von 0,5 min bis 120 min, insbesondere 1 min bis 30 min zu erhitzen. Eine zu kurze Aushärtungsdauer sowie eine nicht ausreichende Erwärmung des Pulverlacks bewirkt eine unzureichende Haftung des Pulverlacks auf dem thermoplastischen Kunststoff. Darüberhinaus wird der Pulverlack nicht ausreichend ausgehärtet, so daß die Dauerbeständigkeit gegen äußere Einflüsse, beispielsweise Witterungseinflüsse nicht optimal ist. Bei Überschreiten der Höchtsgrenzen der Temperatur kann es vorkommen, daß bereits Zersetzungserscheinungen der Pulverlackbeschichtung auftreten. Auch sind unter Umständen die thermoplastischen Kunststoffe selbst derartig hohen Temperaturen nicht gewachsen.

Die Anforderungen an den Lackaufbau entsprechen üblichen Anforderungen der jeweiligen Formteile, so beipsielsweise den Anforderungen an den Lackaufbau im Automobilbereich, für den Laden- und/oder Messebau.

Die Auswahl der thermoplastischen Kunststoffe zur Herstellung der Formteile ist weniger kritisch. Voraussetzung ist jedoch, daß die Kunststoffe extrudierbar sind und in einem Temperaturbereich schmelzen, der mit dem Schmelzbereich der Dekorschicht oder Lackschicht, insbesondere des Pulverlackes kompatibel ist. Ein hoher Schmelzbereich der thermoplastischen Kunststoffe erfordert hohe Temperaturen des Formteils, so daß die zur Aushärtung des Lacks notwendige Temperatur unter Umständen nur durch Abkühlen der Lackbeschichtung erreichbar ist. Thermisch instabile thermoplastische Kunststoffe sind jedoch in der Regel schlecht extrudierbar, insbesondere nicht bei erhöhten Temperaturen. Demgemäß sind die thermoplastischen Kunststoffe, die in der vorliegenden Erfindung zur Herstellung der Formteile eingesetzt werden, ausgewählt aus extrudierbaren Polyolefinen, insbesondere Polyethylen, Polypropylen, Polyvinylverbindungen, insbesondere Polyvinylchlorid, Polyamiden, Polyacetalen, Polycarbonaten, Polyestern, Polyepoxiden, Polyurethanen, Ionomeren und deren Gemischen, insbesondere ABS/PC-Polymerisate.

Die Art des extrusionsfähigen Kunststoffs richtet sich nach dem gewünschten Anwendungszweck des Formteiles. Wenn beispielsweise im Automobilbereich eine hohe Splitterfestigkeit gefordert wird, so ist es im Sinne der vorliegenden Erfindung bevorzugt, Acrylnitril-butadien-sytrol-polymerisate (ABS), Polycarbonate (PC), Polyolefine und insbesondere Polypropylene und ABS/PC-Gemische einzusetzen, die gegebenenfalls Füller wie Talkum enthalten. Für den Fall, daß keine hohen Anforderungen an die Splitterfestigkeit gestellt werden, können auch thermoplastische Polyester oder Polystyrol, beispielsweise für die Herstellung von Abdeckungen für Motorenblöcke, eingesetzt werden.

Im Automobilbereich sind von besonderer Bedeutung die Kratzfestigkeit, die Lichtechtheit (UV-Florida-Test) und die Wetterfestigkeit des Lackes. Da es mit Hilfe der vorliegenden Erfindung möglich ist, an sich im Automobilbereich bekannte Lacke mittels Walzendruckverfahren einzusetzen, werden die gewünschten Anforderungen bei der Verwendung dieser Lacke erfüllt.

Zur weiteren Verbesserung der Haftung zwischen der Druckfarbe (Dekor) oder der Lackschicht und dem extrusionfähigen Kunststoffmaterial ist es ohne weiteres möglich, vor dem Hinterspritzen des Laminats aus Trägerfilm und Dekorschicht oder Lackschicht dieses mit einem an sich bekannten Haftvermittler, gegebenenfalls durch eine weitere Walze, zu beschichten. In gleicher Weise ist es im Sinne der Erfindung möglich, Lochblenden, Verstärkungsgewebe, Verstärkungsvliese oder ähnliche Materialien zur Herstellung von sogenannten Sandwich-Strukturen zwischen die Dekorschicht oder Lackschicht und das Kunststoffmaterial einzubringen. Die hier einzusetzenden Materialien sind dem Fachmann aus der allgemeinen Kunststofftechnologie bekannt. Bedingt durch die relativ geringe Viskosität der Coextrudate ist ein Eindringen des Verstärkungsmaterials sowohl in die Pulverlackbeschichtung als auch in den thermoplastischen Kunststoff zu erwarten. Dadurch läßt sich eine besonders feste Verbindung zwischen der Lackbeschichtung und dem thermoplastischen Kunststoff erreichen.

Wenn nun mittels Hinterspritztechnik ein verbleibendes Volumen im Preßwerkzeug mit einem thermoplastischen Kunststoff ausgefüllt wird, entsteht eine außerordentlich gute Verbindung zwischen der Dekorschicht oder Lackschicht und dem Kunststoff, da auch hier beide Grenzflächen praktisch aus der Schmelze heraus miteinander reagieren.

Obwohl es mit Hilfe der vorliegenden Erfindung bereits möglich ist, eine außerordentlich gute Festigkeit des thermoplastischen Kunststoffs zu erreichen, kann es für gewisse Anforderungen notwendig sein, die mechanische Stabilität des thermoplastischen Kunststoffs weiter zu erhöhen. Hierzu ist in einer weiteren Ausführungsform der vorliegenden Erfindung die Möglichkeit gegeben, starre oder flexible Verstärkungsmaterialien, beispielsweise Verstärkungsfasern, beispielsweise Glasfasern, Kohlenstoffasern, hochresistente organische Fasern, Metallfasern oder Keramikfasern in die Kunststoffmaterialien, beispielsweise während der Coextrusion des thermoplastischen Kunststoffes einzuarbeiten.

Bedingt durch die zur Extrusion erforderlichen Temperaturen befindet sich das Coextrudat nach dem Verlassen der Extrusionsdüsen bei einer mehr oder weniger hohen Temperatur. Nun kann es erforderlich sein, durch Pressen des Laminats die Verbindung der Schichten zu verbessern. Erforderlich ist es jedoch, den Pulverlack zu diesem Zeitpunkt des Verfahrens noch nicht auszuhärten. Gegebenenfalls ist es daher erforderlich, das Laminat durch Abkühlen auf den gewünschten Temperaturbereich zu bringen.

Im Anschluß an die Coextrusion oder die Auftragung der Dekorschicht oder Lackschicht findet gemäß einer bevorzugten Ausführungsform der Erfindung die Formgebung des erhaltenen Laminats statt. Hierzu bieten sich dem Fachmann eine Fülle von bekannten Möglichkeiten. Bei der Herstellung von folienartigen Formteilen kann beispielsweise die Formgebung vollständig entfallen.

Für den Fall jedoch, daß eine entsprechende Formgebung erwünscht ist, wird es im Anschluß an den Auftrag der Dekorschicht oder der ganzflächigen einheitlichen Lackschicht beispielsweise möglich, durch Einführung des erhaltenen Laminats in ein Preßwerkzeug dieses Laminat zur gewünschten Form bei erhöhter Temperatur und gegebenenfalls unter vermindertem Druck der gewünschten Geometrie entsprechend tiefzuziehen. Die hier einzusetzenden Temperaturen und Drücke sind aus dem Bereich des Automobilbaus und insbesondere der Herstellung von Formteilen aus Kunststoffen bekannt und bewegen sich üblicherweise in einem Rahmen von etwa 80 bis 130 °C. Höhere Temperaturen führen hierbei zu einer Aushärtung des Pulverlacks.

Das so erhaltene Formteil kann nach dem Erkalten ohne weiteres aus der Form gelöst werden.

In einer weiteren Ausführungsform der Erfindung wird zwischen dem Trägerfilm und der Dekorschicht oder der Lackschicht eine Klarlackschicht eingebracht. Hierbei ist dann die Abziehbarkeit des Trägerfilms von der Klarlackschicht zu gewährleisten, die Bestandteil des Formteils wird. Auch diese Klarlackschicht kann durch die oben genannten Verfahren zur Aufbringung der Dekorschicht oder der Lackschicht auf den Trägerfilm aufgebracht werden. Als Klarlackschicht können insbesondere im Automobilbereich verbreitete, an sich bekannte, Acrylatlacke eingesetzt werden. Die Dicke dieser Schicht beträgt vorzugsweise 10 bis 50 µm. Auch hier ist eine Verbindung mit der Dekorschicht oder Lackschicht aus der Schmelze, wenigstens an der Grenzfläche bevorzugt.

Die Schichtdicken der jeweiligen Schichten des Laminats aus thermoplastischem Kunststoff, Pulverlack, Trägerfolie und gegebenenfalls der Klarlackschicht sind weniger kritisch, d.h. sie sind dem speziellen Anwendungsfall jeweils angepaßt. Die Schichtdicken hängen insbesondere von der Extrudierbarkeit und den gewünschten Eigenschaften der jeweiligen Schichten ab. Ein Formteil, das gewisse tragende Eigenschaften haben soll, erfordert im allgemeinen eine größere Schichtdicke als ein Formteil, das nur dekorativen Zwecken dient. So ist es beispielsweise möglich, den thermoplastischen Kunststoff in einer Dicke von 0,2 bis 10 cm, insbesondere 0,5 bis 5 cm Schichtdicke zu extrudieren oder mittels Hinterspritztechnik herzustellen.

Obwohl theroretisch auch bei der Pulverlackschicht eine der thermoplastischen Kunststoffschicht entsprechende Schichtdicke extrudierbar sein sollte, ist es jedoch bevorzugt, die Schichtdicke der Pulverlackbeschichtung im Bereich von 0,1 bis 5 mm, insbesondere 0,02 bis 0,1 mm oder 0,1 bis 0,5 mm einzustellen. Die Dicke der Pulverlackbeschichtung ist im vorliegenden Fall direkt proportional zu den Kosten der Beschichtung. Dementsprechend wird der Fachmann bestrebt sein, die Pulverlackbeschichtung so dünn wie möglich aufzutragen, ohne jedoch Einschränkungen bei der Gebrauchstauglichkeit hinzunehmen. Größere Schichtdicken können beispielsweise bei der Verwendung von Verstärkungsmaterialien zwischen Dekorschicht oder Lackschicht und extrusionsfähigem Kunststoffmaterial erforderlich sein.

Mit Hilfe der vorliegenden Erfindung können vorzugsweise Formteile aus thermoplastischen Kunststoffen für den Innen- und Außenbereich von Automobilen, für den Laden- und/oder Messebau hergestellt werden.

Im Automobilbereich ist es besonders bevorzugt, Karrosserieteile, Kotflügel, Motorhauben, Kofferraumhauben, Radkappen, Stoßstangen, Verdeckabdeckungen, Windabweiser, Innenverkleidungen, Rückspiegelgehäuse, Motorabdeckungen, Zierleisten und/oder Türverkleidungen oder Teile davon mit Hilfe der vorliegenden Erfindung herzustellen.

## Patentansprüche

1. Verfahren zur Herstellung eines mit einer getrockneten oder ausgehärteten Dekor- oder Lackschicht versehenen Formteils aus Kunststoffmaterialien, dadurch gekennzeichnet, daß die Dekor- oder Lackschicht im nicht getrockneten bzw. nicht ausgehärteten Zustand mit einem extrusionsfähigen thermoplastischen Kunststoff hinterspritzt oder hinterpreßt wird.

2. Verfahren nach Anspruch 1, wobei man
(a) einen Trägerfilm mit einer trennbaren ganzflächigen Dekorschicht oder einheitlichen Lackschicht versieht,
(b) das so erhaltene Laminat ohne vorherige Trocknung oder Aushärtung der Dekorschicht oder Lackschicht mit einem extrusionsfähigen thermoplastischen Kunststoff hinterspritzt oder hinterpreßt,
(c) das erhaltene Formteil aus dem Werkzeug löst und anschließend
(d) den Trägerfilm und die ganzflächige Dekorschicht oder einheitliche Lackschicht durch Abziehen voneinander trennt.

3. Verfahren nach Anspruch 2, dadurch gekennzeichnet, daß der Trägerfilm, gegebenenfalls eine Klarlackschicht, die Dekorschicht oder Lackschicht und der thermoplastische Kunststoff durch Coextrusion aufeinander gebracht werden.

4. Verfahren nach Anspruch 2 oder 3, dadurch gekennzeichnet, daß man einen Trägerfilm mit einer Dicke von 30 bis 200 µm, insbesondere 30 bis 100 µm einsetzt.

5. Verfahren nach einem der Ansprüche 2 bis 4, dadurch gekennzeichnet, daß man als Trägerfilm einen Kunststofffilm, insbesondere aus Polyester, einsetzt.

6. Verfahren nach einem der Ansprüche 2 bis 5, dadurch gekennzeichnet, daß man die Dekorschicht oder die ganzflächige einheitliche Lackschicht mittels Walzendruckverfahren oder elektrostatischer Pulverbeschichtung auf den Trägerfilm aufbringt.

7. Verfahren nach Anspruch 6, dadurch gekennzeichnet, daß die Pulverbeschichtung ausgewählt ist aus thermoplastisch-duroplastischen Materialien, insbesondere Polyamiden, Ethylen/Vinylacetat-Copolymeren, Polyestern, Polyepoxiden und deren Gemischen.

8. Verfahren nach Anspruch 7, dadurch gekennzeichnet, daß die Polyepoxide ausgewählt sind aus festen Epoxidharzen auf der Basis von Bisphenol A und insbesondere einem bei Raumtemperatur festen Vernetzungsmittel, ausgewählt aus Dicyandiamiden, phenolischen Härtern, Imidazolen und Dicarbonsäureanhydriden, insbesondere Maleinsäureanhydrid.

9. Verfahren nach Anspruch 7, dadurch gekennzeichnet, daß die Polyester ausgewählt sind aus einem Gemisch aus Polyesterpolycarbonsäuren und Triglycidylisocyanuraten.

10. Verfahren nach einem der Ansprüche 2 bis 9, dadurch gekennzeichnet, daß man den Trägerfilm vor dem Versehen mit der Dekorschicht oder der einheitlichen Lackschicht verformt, insbesondere tiefzieht.

11. Verfahren nach Anspruch 10, dadurch gekennzeichnet, daß man den vorgeformten Trägerfilm mit Pulverlack durch Aufsprühen versieht.

12. Verfahren nach einem der Ansprüche 2 bis 9, dadurch gekennzeichnet, daß man das Laminat aus Trägerfilm und Dekorschicht oder Lackschicht in einem Preßwerkzeug positioniert und bei erhöhter Temperatur, gegebenenfalls unter vermindertem Druck verformt, insbesondere tiefzieht.

13. Verfahren nach einem der Ansprüche 2 bis 9, dadurch gekennzeichnet, daß man das Laminat aus Trägerfilm, Dekorschicht oder Lackschicht und extrusionsfähigem Kunststoff in einem Preßwerkzeug positioniert und bei erhöhter Temperatur, gegebenenfalls unter vermindertem Druck, verformt, insbesondere tiefzieht.

14. Verfahren nach einem der Ansprüche 1 bis 13, dadurch gekennzeichnet, daß das Kunststoffmaterial ausgewählt ist aus gegebenenfalls Füller enthaltenden Acrylnitril-butadien-styrol-polymerisaten, Polycarbonaten und Polyolefinen, insbesondere Polyethylenen, Polypropylen, Polyvinylverbindungen, Polyamiden, Polyacetalen, Polyepoxiden, Polyurethanen, Ionomeren und deren Gemischen, insbesondere ABS/PC-Polymerisaten.

15. Verfahren nach einem der Ansprüche 1 bis 14, dadurch gekennzeichnet, daß das Kunststoffmaterial Verstärkungsmittel enthält, ausgewählt aus Verstärkungsfasern, insbesondere Glasfasern, Kohlenstoffasern, hochresistenten organischen Fasern, Metallfasern oder Keramikfasern.

16. Verfahren nach einem der Ansprüche 2 bis 15, dadurch gekennzeichnet, daß man zwischen dem Trägerfilm und der Dekorschicht oder Lackschicht eine Klarlackschicht einbringt.

17. Verfahren nach Anspruch 16, dadurch gekennzeichnet, daß die Klarlackschicht, insbesondere ein handelsüblicher Automobilklarlack auf Acrylbasis, eine Dicke von 10 bis 50 µm aufweist.

18. Verfahren nach Anspruch 16 oder 17, dadurch gekennzeichnet, daß man den Trägerfilm durch Aufsprühen, Tauchen oder Walzendruckverfahren mit der Klarlackschicht versieht und gegebenenfalls trocknet.

19. Verfahren nach einem der Ansprüche 6 bis 18, dadurch gekennzeichnet, daß man Haftvermittler oder Verstärkungsmittel, insbesondere Lochblenden, Verstärkungsgewebe und/oder Verstärkungsvliese zwischen dem thermoplastischen Kunststoff und der Pulverbeschichtung einbringt.

20. Verfahren nach einem der Ansprüche 1 bis 19, dadurch gekennzeichnet, daß man die Dekorschicht oder Lackschicht im Temperaturbereich von 130 bis 240 °C, insbesondere 180 bis 200 °C im Verlauf von 0,5 bis 120 min, insbesondere 1 bis 30 min aushärtet.

21. Verfahren nach einem der Ansprüche 6 bis 20, dadurch gekennzeichnet, daß man die Dicke der Pulverlackbeschichtung auf 0,1 bis 5 mm, insbesondere 0,02 bis 0,1 mm oder 0,1 bis 0,5 mm einstellt.

22. Verfahren nach einem der Ansprüche 1 bis 21, dadurch gekennzeichnet, daß man Formteile für den Innen- und Außenbereich von Automobilen, für den Laden- und/oder Messebau herstellt.

23. Verfahren nach Anspruch 21, dadurch gekennzeichnet, daß man Karrosserieteile, Kotflügel, Motorhauben, Kofferraumhauben, Radkappen, Stoßstangen, Verdeckabdeckungen, Windabweiser, Innenverkleidungen, Rückspiegelgehäuse, Karrosserieteile, Motorabdeckungen, Zierleisten, Türverkleidungen oder Teile davon herstellt.

## Claims

1. A process for manufacturing a moulded article made of plastic materials provided with a dried or cured decorative or paint layer, characterized in that an extrudable thermoplastic material is injected or pressed behind the decorative or paint layer in the non-dried or non-cured state.

2. The process according to claim 1, wherein
(a) a backing film is provided with a separable decorative layer on the entire surface thereof or a uniform paint layer,
(b) an extrudable thermoplastic material is injected or pressed behind the so obtained laminate without preliminary drying or curing the decorative layer or paint layer,
(c) the moulded article thus obtained is released from the mould and subsequently
(d) the backing film and the decorative layer on the entire surface thereof or the uniform paint layer are separated from one another by stripping.

3. The process according to claim 2, characterized in that the backing film, optionally a clear paint layer, the decorative layer or paint layer, and the thermoplastic material are sandwiched by coextrusion.

4. The process according to claim 2 or 3, characterized in that a backing film having a thickness of from 30 to 200 µm, in particular 30 to 100 µm, is used.

5. The process according to any one of claims 2 to 4, characterized in that a plastic film, in particular from polyester, is used as a backing film.

6. The process according to any one of claims 2 to 5, characterized in that the decorative layer or the uniform paint layer on the entire surface thereof is applied on the backing film by roller printing or electrostatic powder coating.

7. The process according to claim 6, characterized in that the powder coating is selected from thermoplastic-duroplastic materials, in particular from polyamides, ethylene/vinyl acetate copolymers, polyesters, polyepoxides, and mixtures thereof.

8. The process according to claim 7, characterized in that the polyepoxides are selected from solid epoxide resins on the basis of bisphenol A and especially a crosslinking agent which is solid at room temperature, selected from dicyanodiamides, phenolic hardeners, imidazoles, and dicarboxylic acid anhydrides, in particular maleic anhydride.

9. The process according to claim 7, characterized in that the polyesters are selected from a mixture of polyesterpoly (carboxylic acids) and triglycidylisocyanruates.

10. The process according to any one of claims 2 to 9, characterized in that the backing film is moulded, particularly deep-drawn, before applying the decorative layer or uniform paint layer thereon.

11. The process according to claim 10, characterized in that the pre-moulded backing film is provided with a powder coating by spraying.

12. The process according to any one of claims 2 to 9, characterized in that the laminate consisting of backing film and decorative layer or paint layer is positioned within a compression mould and moulded, in particular deep-drawn, at elevated temperature, optionally under reduced pressure.

13. The process according to any one of claims 2 to 9, characterized in that the laminate consisting of backing film, decorative layer or paint layer, and extrudable plastic is positioned within a compression mould and moulded, in particular deep-drawn, at elevated temperature, optionally under reduced pressure.

14. The process according to any one of claims 1 to 13, characterized in that the plastic material is selected from acrylonitrile-butadiene-styrene polymers, polycarbonates, and polyolefines, in particular polyethylenes, polypropylenes, polyvinyl compounds, polyamides, polyacetals, polyepoxides, polyurethanes, ionomers, and mixtures thereof, in particular ABS/PC polymers containing optionally fillers.

15. The process according to any one of claims 1 to 14, characterized in that the plastic material contains reinforcing materials selected from reinforcing fibers, in particular glass fibers, carbon fibers, high-resistant organic fibers, metal fibers, or ceramic fibers.

16. The process according to any one of claims 2 to 15, characterized in that a clear paint layer is incorporated between the backing film and the decorative layer or paint layer.

17. The process according to claim 16, characterized in that the clear paint layer, in particular a commercial automobile clear paint, has a thickness of from 10 to 50 µm.

18. The process according to claim 16 or 17, characterized in that the backing film is provided with the clear paint layer by spraying, dipping, or roller printing and, optionally, it is dried.

19. The process according to any one of claims 6 to 18, characterized in that adhesion promoters or reinforcing agents, in particular perforated screens, reinforcing fabrics, and/or reinforcing webs are incorporated between the thermoplastic material and the powder coating.

20. The process according to any one of claims 1 to 19, characterized in that the decorative layer or paint layer is cured in the temperature range of from 130 to 240 °C, in particular 180 to 200 °C, during 0.5 to 120 min, in particular 1 to 30 min.

21. The process according to any one of claims 6 to 20, characterized in that the thickness of the powder coating is adjusted to 0.1 to 5 mm, in particular 0.02 to 0.1 mm or 0.1 to 0.5 mm.

22. The process according to any one of claims 1 to 21, characterized in that there are produced moulded parts for the interior and exterior areas of automobiles, for the shop-fitting and/or exhibition construction.

23. The process according to claim 21, characterized in that there are manufactured body panels, fenders, hoods, trunk lids, wheel covers, bumpers, tonneau covers, air deflectors, interior trims, rearview mirror casings, body panels, engine shields, trim strips, door trim panels or parts thereof.

## Revendications

1. Procédé de fabrication d'une pièce moulée en matière synthétique recouverte d'une couche décor ou de vernis séchée ou durcie, caractérisé en ce qu'une matière thermoplastique extrudable est injectée ou moulée par pression sous la couche décor ou de vernis non séchée et/ou non durcie.

2. Procédé selon la revendication 1, du type selon lequel
(a) un film support est muni d'une couche décor sur toute sa surface ou d'une couche de vernis uniforme, séparable,
(b) une matière thermoplastique extrudable est injectée ou moulée sous le laminé ainsi obtenu sans séchage ou durcissement préalable de la couche décor ou de la couche de vernis,
(c) la pièce moulée obtenue est enlevée de l'outil et finalement
(d) le film support et la couche décor de toute la surface ou la couche de vernis uniforme sont séparés l'un de l'autre par pelage.

3. Procédé selon la revendication 2, caractérisé en ce que le film support, le cas échéant une couche de vernis transparente, la couche décor ou la couche de vernis et la matière thermoplastique sont appliqués l'un sur l'autre par coextrusion.

4. Procédé selon la revendication 2 ou 3, caractérisé en ce qu'on utilise un film support d'une épaisseur de 30 à 200 µm, notamment de 30 à 100 µm.

5. Procédé selon l'une des revendications 2 à 4, caractérisé en ce qu'on utilise un film support en matière synthétique, notamment en polyester.

6. Procédé selon l'une des revendications 2 à 5, caractérisé en ce que la couche décor ou la couche de vernis uniforme de toute la surface est appliquée sur le film support par une méthode d'impression à rouleaux ou par revêtement électrostatique de poudre.

7. Procédé selon la revendication 6, caractérisé en ce que le revêtement de poudre est choisi parmi des matières thermoplastiques et duroplastiques, notamment des polyamides, copolymères d'éthylène et d'acétate de vinyle, polyesters, polyépoxydes et leurs mélanges.

8. Procédé selon la revendication 7, caractérisé en ce que les polyépoxydes sont choisis parmi des résines époxy solides à base de bisphénol A et notamment un agent de réticulation solide à la température ambiante, choisi parmi des dicyandiamides, durcisseurs phénoliques, imidazoles et anhydrides d'acides dicarboxyliques, notamment des anhydrides de l'acide maléique.

9. Procédé selon la revendication 7, caractérisé en ce que les polyesters sont choisis dans un mélange des acides polycarboxyliques de polyester et des triglycidylisocyanurates.

10. Procédé selon l'une des revendications 2 à 9, caractérisé en ce que le film support est déformé, notamment par emboutissage profond avant l'application de la couche décor ou de la couche de vernis uniforme.

11. Procédé selon la revendication 10, caractérisé en ce que le film support préformé est revêtu par pulvérisation d'un vernis en poudre.

12. Procédé selon l'une des revendications 2 à 9, caractérisé en ce que le laminé constitué du film support et de la couche décor ou de la couche de vernis est positionné dans un outil de presse et déformé, notamment par emboutissage profond à une température élevée, le cas échéant sous pression réduite.

13. Procédé selon l'une des revendications 2 à 9, caractérisé en ce que le laminé constitué du film support, de la couche décor ou de la couche de vernis et de matière synthétique extrudable est positionné dans un outil de presse et déformé, notamment par emboutissage profond, à une température élevée, le cas échéant sous pression réduite.

14. Procédé selon l'une des revendications 1 à 13, caractérisé en ce que la matière synthétique est choisie parmi des polymérisats d'acrylonitrile-butadiène-styrène, des polycarbonates et des polyoléfines, notamment des polyéthylènes, polypropylènes, composés de polyvinyle, polyamides, polyacétals, polyépoxydes, polyuréthanes, ionomères et leurs mélanges, notamment des polymérisats ABS/PC, contenant éventuellement des charges.

15. Procédé selon l'une des revendications 1 à 14, caractérisé en ce que la matière synthétique contient des agents d'armature choisis parmi des fibres de renfort, notamment des fibres de verre, fibres de carbone, fibres organiques à haute résistance, fibres métalliques ou fibres en céramique.

16. Procédé selon l'une des revendications 2 à 15, caractérisé en ce qu'une couche de vernis transparente est insérée entre le film support et la couche décor ou la couche de vernis.

17. Procédé selon la revendication 16, caractérisé en ce que la couche de vernis transparente, notamment un vernis du commerce à base acrylique pour automobile, présente une épaisseur de 10 à 50 µm.

18. Procédé selon la revendication 16 ou 17, caractérisé en ce que le film support est revêtu de la couche de vernis transparente par pulvérisation, par immersion ou par une méthode d'impression à rouleaux, et le cas échéant séché.

19. Procédé selon l'une des revendications 6 à 18, caractérisé en ce que des agents d'adhérence ou des agents d'armature, notamment des diaphragmes à trous, des tissus et/ou des non tissés de renfort sont insérés entre la matière synthétique thermoplastique et le revêtement de poudre.

20. Procédé selon l'une des revendications 1 à 19, caractérisé en ce que la couche décor ou la couche de vernis est durcie à une température entre 130 et 240°C, notamment entre 180 et 200°C pendant 0,5 à 120 min., notamment 1 à 30 min.

21. Procédé selon l'une des revendications 6 à 20, caractérisé en ce que l'épaisseur du revêtement de vernis en poudre est réglée de 0,1 à 5 mm, notamment de 0,02 à 0,1 mm ou de 0,1 à 0,5 mm.

22. Procédé selon l'une des revendications 1 à 21, caractérisé en ce que des pièces moulées sont fabriquées pour l'intérieur et l'extérieur des automobiles, pour la construction de magasins et/ou d'expositions.

23. Procédé selon la revendication 21, caractérisé en ce qu'on fabrique des parties de carrosserie, ailes, capots de moteur, couvercles de coffre à bagages, enjoliveurs, pare-chocs, capotes, pare-vent, habillages intérieurs, boîtiers de rétroviseur, éléments de carrosserie, recouvrements de moteur, baguettes enjoliveurs, habillages de porte ou des pièces de ces éléments.
